# EUROPEAN PATENT APPLICATION

(11) **EP 4 554 245 A1**
(43) Date of publication of application: **14.05.2025**
(21) Application number: 23835414.6
(22) Date of filing: 29.06.2023
(51) Int. Cl.: H04N 23/55, G02B 30/56, G03B 35/08, G03B 35/18

(54) **VIDEO SYSTEM, THREE-DIMENSIONAL ELEMENT VIDEO ACQUISITION METHOD, RECORDING MEDIUM, SECOND LENS ARRAY, THREE-DIMENSIONAL DISPLAY DEVICE, AND THREE-DIMENSIONAL ELEMENT VIDEO SIGNAL TRANSMISSION METHOD**

(30) Priority: 08.07.2022 JP 2022110832
(71) Applicant: Josho Gakuen Educational Foundation, Osaka 535-8585 (JP)
(72) Inventor: KAWAKITA, Masahiro, Hirakata-shi, Osaka 573-0196 (JP)
(74) Representative: KATZAROV S.A.
(86) International application number: PCT/JP2023/024173
(87) International publication number: WO 2024/009882

(57) **Abstract**

A video system (2) includes: an aerial imaging optical system (6) that has retroreflective properties and converges, in the air, light rays from a three-dimensional object (4) to form an aerial image (16) representing the three-dimensional object (4); a first lens array (8) that is disposed at an image-forming position of the aerial image (16) or in the vicinity of the image-forming position and includes a plurality of first lenses (34) arranged two-dimensionally; and a camera (10) that includes an imaging lens (36) and an image sensor (38) and captures light rays transmitted from the aerial image (16) through the first lens array (8) to output a three-dimensional element video signal including light ray information related to the light rays from the aerial image (16).

## Description

### [Technical Field]

The present invention relates to a video system, a three-dimensional element video acquisition method, a recording medium, a second lens array, a three-dimensional display device, and a three-dimensional element video signal transmission method.

### [Background Art]

A light field technique is a technique of acquiring, processing, and reproducing light ray information related to light rays radiated from a three-dimensional object. In the light field technique, a three-dimensional video that can be viewed stereoscopically by naked eyes can be displayed based on the light ray information acquired, and the shape and texture of the surface of the three-dimensional object can be reproduced realistically by reproducing, in the three-dimensional video, the light rays radiated from the three-dimensional object.

As a first example of the light field technique, a technique of using an optical lens to form a real image of a three-dimensional object that is an imaging target and capturing light rays transmitted through a lens array disposed at an image-forming position of the real image is conventionally known (for example, see Non Patent Literature (NPL) 1).

Moreover, as a second example of the light field technique, a technique of using a dedicated camera equipped with an image sensor and a lens array disposed in the vicinity of the image sensor to capture an image of a three-dimensional object that is an imaging target is conventionally known (for example, see NPL 2).

Furthermore, as a third example of the light field technique, a technique of a multi-camera method of using at least 100 cameras to capture an image of a three-dimensional object that is an imaging target is conventionally known (for example, see NPL 3).

### [Citation List]

### [Non Patent Literature]

[NPL 1] J. Arai, et al., "Integral three-dimensional television with video system using pixel-offset method", Optics Express, Vol. 21, No. 3, pp. 3474-3485 (2013)
[NPL 2] Ng R., et al., "Light Field Photography with a Hand-held Plenoptic Camera", Stanford University Computer Science Tech Report, pp.1-11 (2005)
[NPL 3] H. Watanabe, et al., "Aktina Vision: Full-parallax three-dimensional display with 100 million light rays", Scientific Reports, Vol.9, Article number: 17688 (2019)
[NPL 4] PARITY MIRROR (registered trademark), [Search on June 29, 2022], Internet (https://evort.jp/store/piq/product/paritymirror)
[NPL 5] H. YAMAMOTO, "Aerial Display with Aerial Imaging by Retro-Reflection (AIRR)", Journal of the Imaging Society of Japan, Vol.56, No.4 pp.341-351 (2017)
[NPL 6] T. KUWAYAMA, "Aerial Display Technology to Realize a Non-Contact Society", Vol.33, No.3, pp. 9-20 (May 2021)

### [Summary of Invention]

### [Technical Problem]

In the technique disclosed in NPL 1, an optical lens having a very large diameter (approx. 50 cm to 1 m) is required for acquiring light ray information in a wide viewing angle. However, it is difficult to manufacture an optical lens having such a size. Additionally, since the distance between a camera and a three-dimensional object that is an imaging target needs to be several meters, the scale of the whole system needs to be large, and therefore the technique is not practical.

Moreover, in the technique disclosed in NPL 2, since a viewing angle in which a camera can capture light rays radiated from a three-dimensional object is narrow (approx. 1°), only very few light ray information can be acquired and the reproducibility of a three-dimensional video is low.

Moreover, in the technique disclosed in NPL 3, since at least 100 cameras are used, the scale of the whole system is large and the cost for the system is expensive, and therefore the technique is not versatile. Furthermore, since the cameras cannot be arranged close to each other due to limitations in camera size, a process of interpolating light ray information from images captured by the cameras is additionally required for acquiring dense light ray information, and therefore the whole process becomes complicated. Furthermore, since it is necessary to spend a long time to perform arithmetic processing on many video signals captured simultaneously by the at least 100 cameras, the technique requires a large amount of labor and time.

The present invention aims to solve the above-described problem and provide a video system, a three-dimensional element video acquisition method, a recording medium, a second lens array, a three-dimensional display device, and a three-dimensional element video signal transmission method that can acquire light ray information in a wide viewing angle while keeping the scale of the whole system small.

### [Solution to Problem]

In order to achieve the above-described aim, a video system according to a first aspect of the present invention includes: an aerial imaging optical system that has retroreflective properties and converges, in air, light rays from a three-dimensional object to form an aerial image representing the three-dimensional object; a first lens array that is disposed at an image-forming position of the aerial image or in a vicinity of the image-forming position and includes a plurality of first lenses arranged two-dimensionally; and a camera that includes an imaging lens and an image sensor and captures light rays transmitted from the aerial image through the first lens array to output a three-dimensional element video signal including light ray information related to the light rays from the aerial image.

According to this aspect, since the aerial imaging optical system having retroreflective properties is used, light rays from the three-dimensional object can be acquired in a wide viewing angle by the aerial imaging optical system even when the size of the aerial imaging optical system is relatively small. Accordingly, light ray information in a wide viewing angle can be acquired while keeping the scale of the whole system small.

For example, a video system according to a second aspect of the present invention is the video system according to the first aspect in which the camera: (i) outputs the three-dimensional element video signal to an external terminal device; (ii) records the three-dimensional element video signal on an external video recording device; or (iii) outputs the three-dimensional element video signal to a three-dimensional element video display.

According to this aspect, a three-dimensional element video signal outputted from the camera can be appropriately processed.

For example, a video system according to a third aspect of the present invention is the video system according to the first or second aspect in which the aerial imaging optical system reflects the light rays from the three-dimensional object at least twice to form the aerial image at the image-forming position at which the aerial image is symmetrical to the three-dimensional object with respect to the aerial imaging optical system.

According to this aspect, an aerial image can be easily formed by the aerial imaging optical system.

For example, a video system according to a fourth aspect of the present invention is the video system according to any one of the first to third aspects in which, in plan view of the first lens array, each of the plurality of first lenses is in a circular, rectangular, or hexagonal shape.

According to this aspect, the first lens array having appropriate optical properties can be used according to the purpose or the like.

For example, a video system according to a fifth aspect of the present invention is the video system according to any one of the first to fourth aspects in which a shape of a surface of each of the plurality of first lenses is spherical or aspherical.

According to this aspect, the first lens array having appropriate optical properties can be used according to the purpose or the like.

For example, a video system according to a sixth aspect of the present invention is the video system according to any one of the first to fifth aspects in which a curvature of each of the plurality of first lenses in a horizontal direction and a curvature of each of the plurality of first lenses in a vertical direction are same, or the curvature in the horizontal direction is larger than the curvature in the vertical direction.

According to this aspect, the first lens array having appropriate optical properties can be used according to the purpose or the like.

For example, a video system according to a seventh aspect of the present invention is the video system according to any one of the first to sixth aspects further including an aperture array that is disposed between the aerial imaging optical system and the first lens array and includes a plurality of apertures arranged at focal length positions of the plurality of first lenses.

According to this aspect, unwanted light is prevented from entering the first lens array by blocking the unwanted light by the aperture array. Moreover, light ray information with a wide depth reproduction range can be acquired by adjusting the size of each of the plurality of apertures.

For example, a video system according to an eighth aspect of the present invention is the video system according to any one of the first to seventh aspects in which the camera includes a single digital camera or a plurality of digital cameras.

According to this aspect, when the camera includes a single digital camera, the scale of the whole system can be kept small. Moreover, when the camera includes the plurality of digital cameras, more light ray information in a wide viewing angle can be acquired.

For example, a video system according to a ninth aspect of the present invention is the video system according to any one of the first to eighth aspects further including: a three-dimensional element video display that includes a display surface, receives the three-dimensional element video signal outputted from the camera, and displays a three-dimensional element video on the display surface based on the three-dimensional element video signal; and a second lens array that is in a substantially same shape as the first lens array, is disposed to face the display surface of the three-dimensional element video display, and includes a plurality of second lenses arranged two-dimensionally. An optical path length between the display surface of the three-dimensional element video display and the second lens array may be substantially same as a focal length of each of the plurality of second lenses.

According to this aspect, an observer can stereoscopically view, as a three-dimensional video, a three-dimensional element video displayed on the display surface of the three-dimensional element video display, by viewing, through the second lens array, the three-dimensional element video.

For example, a three-dimensional element video acquisition method according to a tenth aspect of the present invention includes: converging, in air, light rays from a three-dimensional object to form an aerial image representing the three-dimensional object, by using an aerial imaging optical system that has retroreflective properties; transmitting light rays from the aerial image through a first lens array that is disposed at an image-forming position of the aerial image or in a vicinity of the image-forming position and includes a plurality of first lenses arranged two-dimensionally; and capturing the light rays transmitted from the aerial image through the first lens array to output a three-dimensional element video signal including light ray information related to the light rays from the aerial image, by using a camera that includes an imaging lens and an image sensor.

According to this aspect, light ray information in a wide viewing angle can be acquired while keeping the scale of the whole system small.

A recording medium according to an eleventh aspect of the present invention is a recording medium having recorded thereon a three-dimensional element video represented by the three-dimensional element video signal outputted from the video system according to any one of the first to ninth aspects.

A second lens array according to a twelfth aspect of the present invention is the second lens array included in the video system according to the ninth aspect.

A three-dimensional display device according to a thirteenth aspect of the present invention includes: the three-dimensional element video display and the second lens array that are included in the video system according to the ninth aspect.

For example, a three-dimensional display device according to a fourteenth aspect of the present invention is the three-dimensional display device according to the thirteenth aspect in which the second lens array is attachable to and detachable from the display surface of the three-dimensional element video display. The three-dimensional display device according to the fourteenth aspect further includes: a detector that detects attachment or detachment of the second lens array to or from the display surface of the three-dimensional element video display; and a display controller that controls display content on the display surface of the three-dimensional element video display, based on a detection result of the detector. The display controller displays, on the display surface: (i) the three-dimensional element video, when the second lens array is attached to the display surface; and (ii) an other video that is different from the three-dimensional element video, when the second lens array is detached from the display surface.

According to this aspect, the display content on the display surface of the three-dimensional element video display can be appropriately changed according to attachment or detachment of the second lens array to or from the display surface of the three-dimensional element video display.

For example, a three-dimensional display device according to a fifteenth aspect of the present invention is the three-dimensional display device according to the thirteenth aspect, in which the second lens array includes: a polarization direction switching element that transmits light rays emitted from the display surface of the three-dimensional element video display to: (i) polarize, in a first polarization direction, the light rays emitted from the display surface, when the three-dimensional element video is displayed on the display surface; and (ii) polarize, in a second polarization direction, the light rays emitted from the display surface, when an other video that is different from the three-dimensional element video is displayed on the display surface, the second polarization direction being different from the first polarization direction; and a polarization-dependent lens array where the light rays transmitted through the polarization direction switching element and polarized in the first polarization direction or the second polarization direction enter.

According to this aspect, in a state where the second lens array is attached to the display surface of the three-dimensional element video display, an observer can stereoscopically view, as a three-dimensional video, a three-dimensional element video or can view, as a two-dimensional video, an other video that is different from a three-dimensional element video, according to the display content on the display surface of the three-dimensional element video display.

A three-dimensional element video signal transmission method according to a sixteenth aspect of the present invention is a three-dimensional element video signal transmission method for transmitting the three-dimensional element video signal outputted from the camera included in the video system according to the first aspect. The three-dimensional element video signal transmission method includes: (a) converting, to a signal of a multi-viewpoint video group or a signal of a multi-viewpoint video group with depth images, the three-dimensional element video signal outputted from the camera; (b) encoding, by a predetermined encoding method, the signal obtained in the converting in (a); (c) transmitting the signal encoded in (b); and (d) decoding, by a predetermined decoding method, the signal transmitted in (c). A viewing angle from each of multiple viewpoints included in the multi-viewpoint video group is at least 30° and at most 90°, and the pitch between the multiple viewpoints is at least 0.5° and at most 2°.

According to this aspect, a three-dimensional element video signal can be easily transmitted.

### [Advantageous Effects of Invention]

According to a video system or the like according to an aspect of the present invention, light ray information in a wide viewing angle can be acquired while keeping the scale of the whole system small.

### [Brief Description of Drawings]

[FIG. 1]

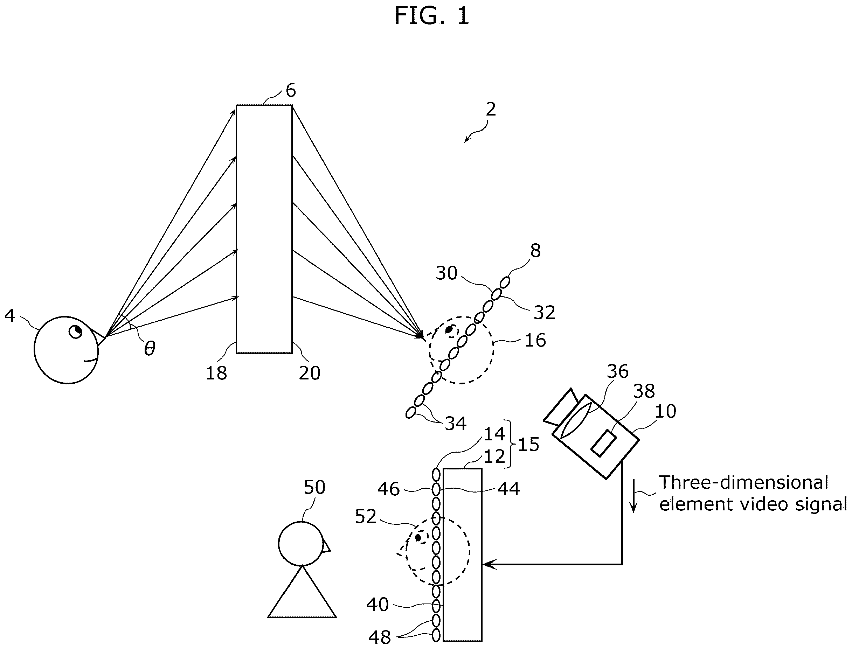

   FIG. 1 illustrates the configuration of a video system according to Embodiment 1.
[FIG. 2]

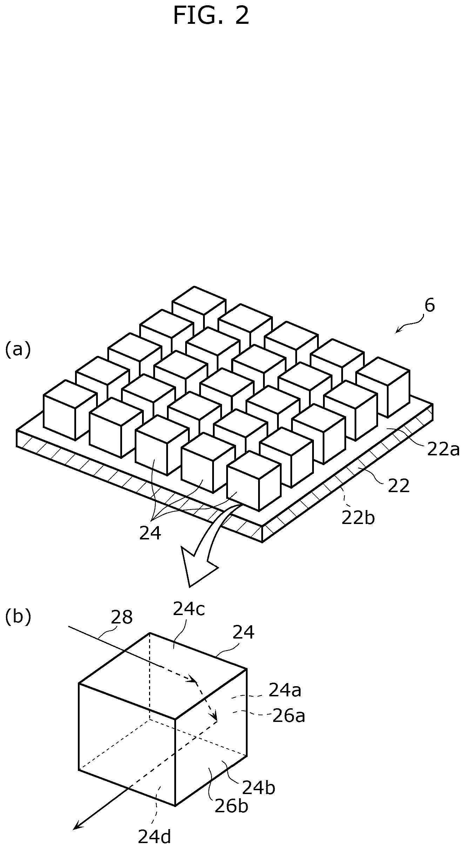

   FIG. 2 illustrates an aerial imaging optical system of the video system according to Embodiment 1.
[FIG. 3]

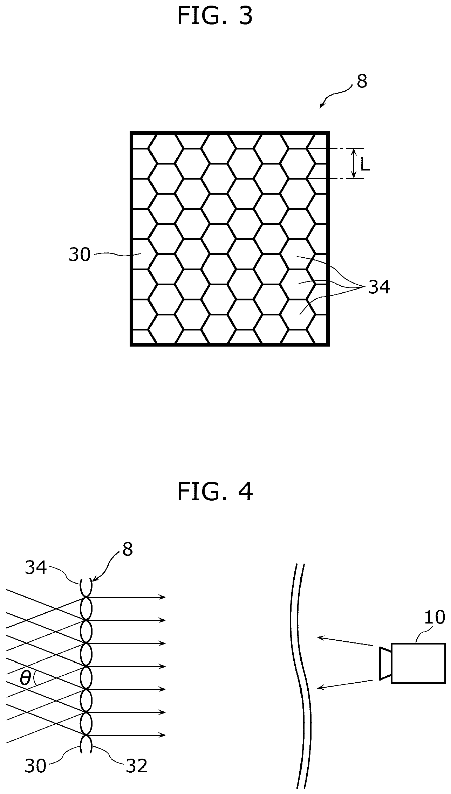

   FIG. 3 illustrates a first lens array of the video system according to Embodiment 1.
[FIG. 4]
   FIG. 4 illustrates optical paths passing through the first lens array of the video system according to Embodiment 1.
[FIG. 5]

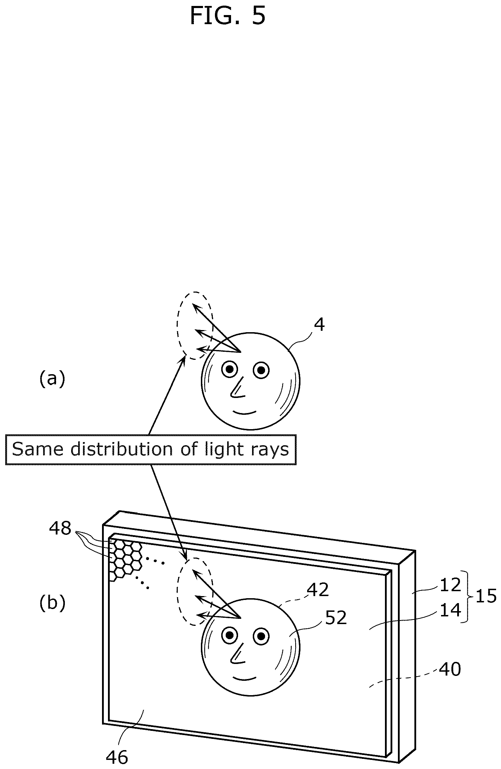

   FIG. 5 illustrates a three-dimensional element video display of the video system according to Embodiment 1.
[FIG. 6]

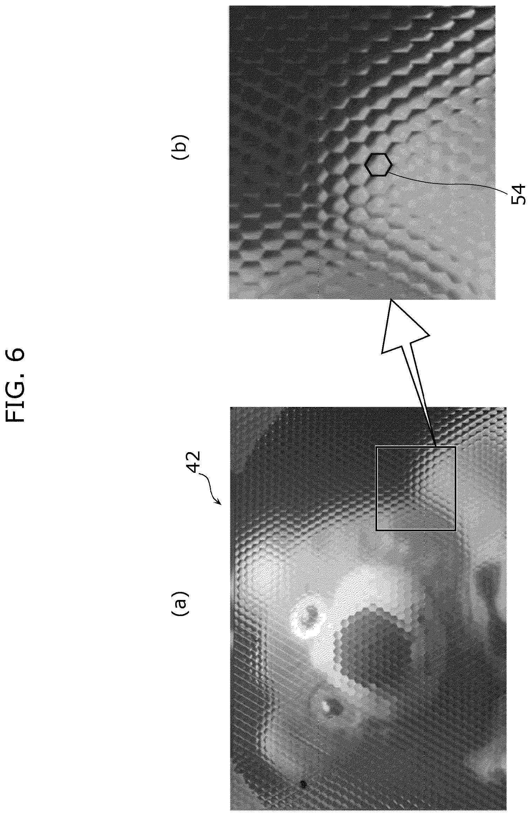

   FIG. 6 illustrates an actual example of a three-dimensional element video.
[FIG. 7]

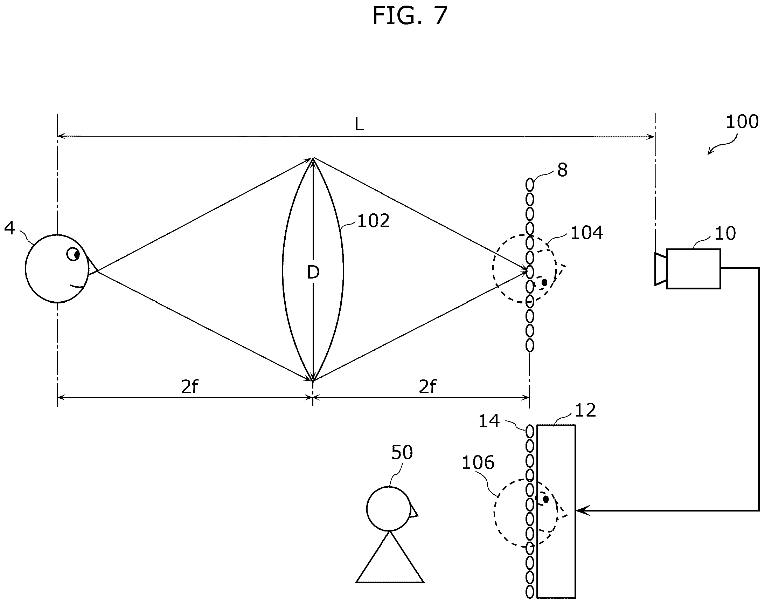

   FIG. 7 illustrates the configuration of a video system according to a comparative example.
[FIG. 8A]

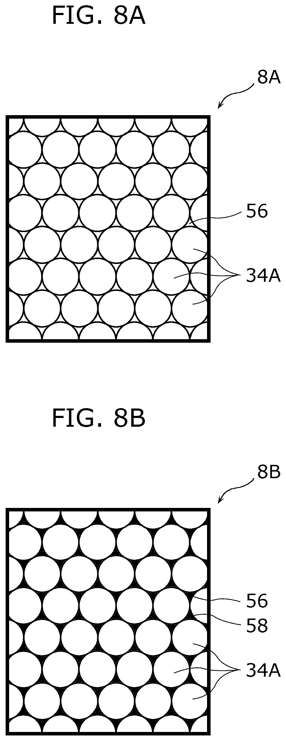

   FIG. 8A illustrates a first lens array according to Variation 1 of Embodiment 1.
[FIG. 8B]
   FIG. 8B illustrates a first lens array according to Variation 2 of Embodiment 1.
[FIG. 8C]

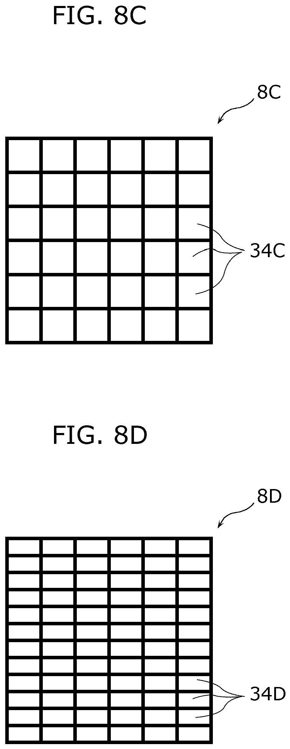

   FIG. 8C illustrates a first lens array according to Variation 3 of Embodiment 1.
[FIG. 8D]
   FIG. 8D illustrates a first lens array according to Variation 4 of Embodiment 1.
[FIG. 8E]

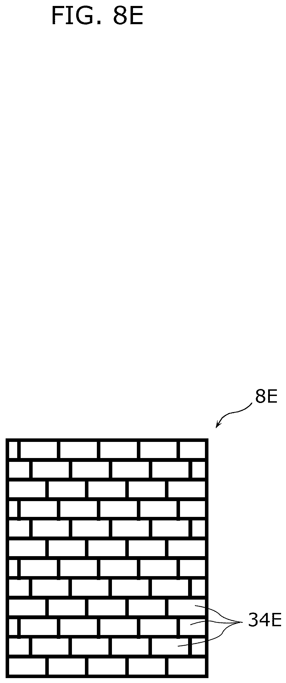

   FIG. 8E illustrates a first lens array according to Variation 5 of Embodiment 1.
[FIG. 9]

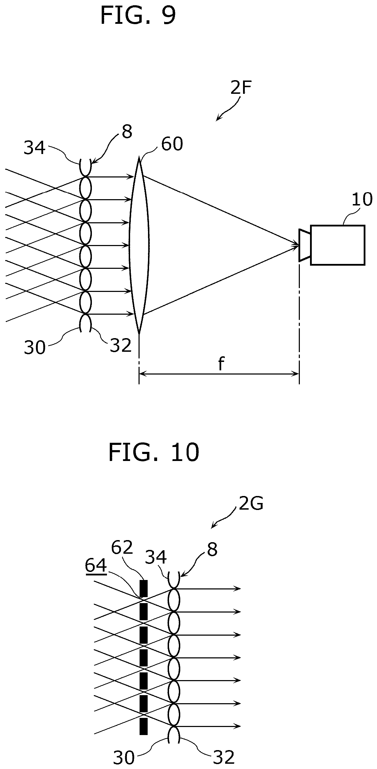

   FIG. 9 illustrates part of the configuration of a video system according to Embodiment 2.
[FIG. 10]
   FIG. 10 illustrates part of the configuration of a video system according to Embodiment 3.
[FIG. 11]

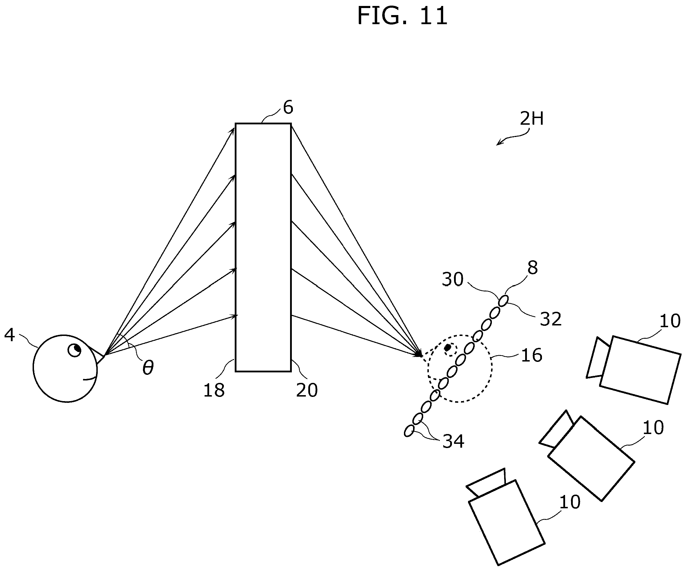

   FIG. 11 illustrates part of the configuration of a video system according to Embodiment 4.
[FIG. 12]

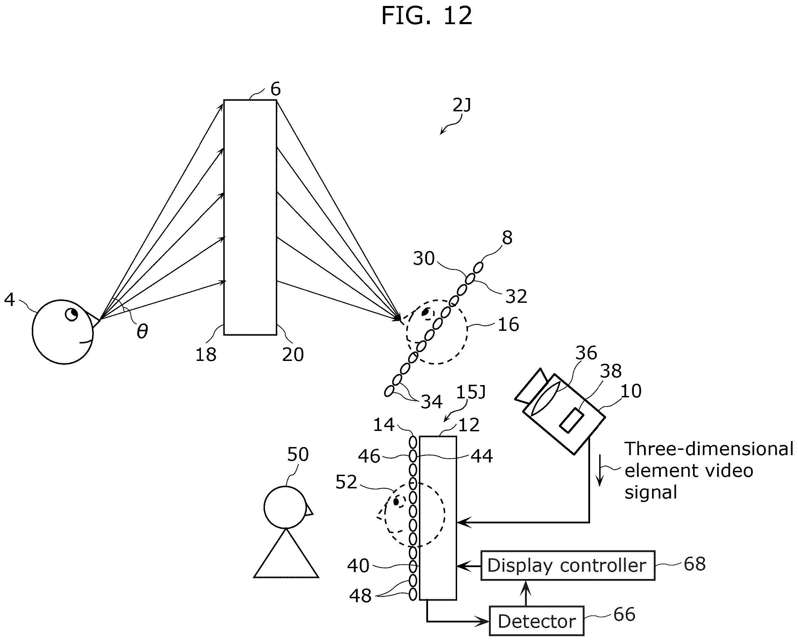

   FIG. 12 illustrates the configuration of a video system according to Embodiment 5.
[FIG. 13]

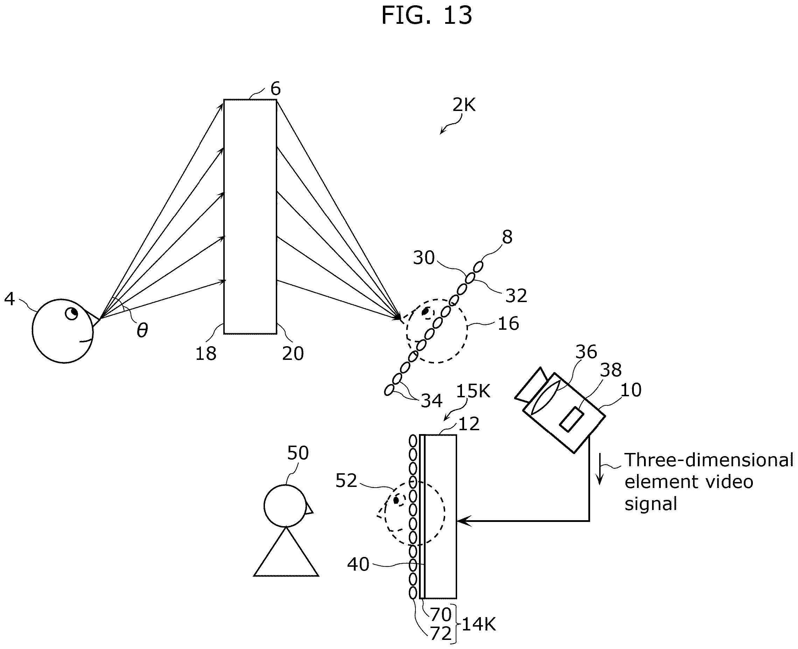

   FIG. 13 illustrates the configuration of a video system according to Embodiment 6.
[FIG. 14]

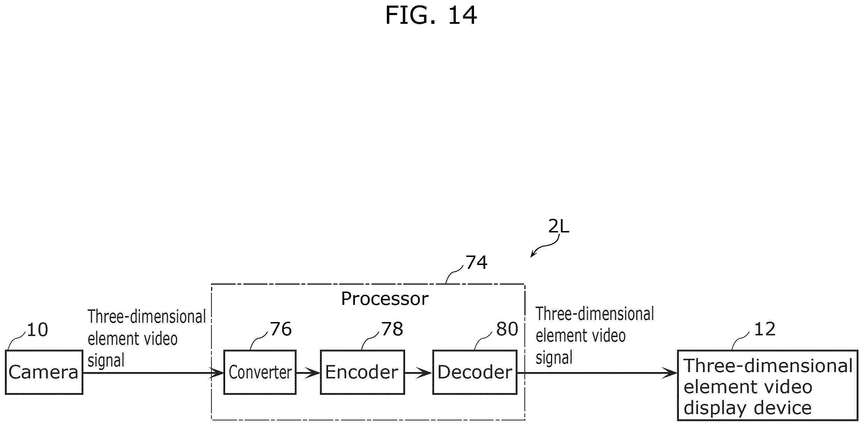

   FIG. 14 is a block diagram illustrating the functional configuration of a video system according to Embodiment 7.
[FIG. 15]

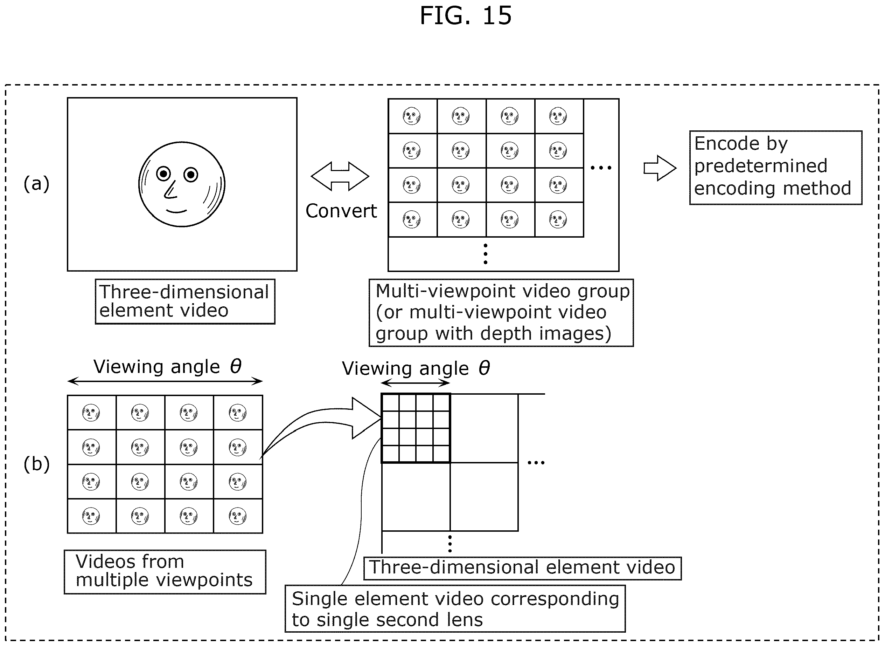

   FIG. 15 is a diagram for describing operation of a processor according to Embodiment 7.

### [Description of Embodiments]

Hereinafter, embodiments of the present invention are described with reference to the accompanying Drawings. It should be noted that each of the embodiments described below shows a general or specific example of the present invention. The numerical values, shapes, materials, constituent elements, the arrangement and connection of the constituent elements etc. shown in the following embodiments are mere examples, and therefore do not limit the present invention. Moreover, among the constituent elements in the following embodiments, constituent elements not recited in any of the independent claims are described as arbitrary constituent elements.

### (Embodiment 1)

### [1-1. Configuration of Video System]

First, the configuration of video system 2 according to Embodiment 1 is described with reference to FIG. 1 to FIG. 5. FIG. 1 illustrates the configuration of video system 2 according to Embodiment 1. FIG. 2 illustrates aerial imaging optical system 6 of video system 2 according to Embodiment 1. FIG. 3 illustrates first lens array 8 of video system 2 according to Embodiment 1. FIG. 4 illustrates optical paths passing through first lens array 8 of video system 2 according to Embodiment 1. FIG. 5 illustrates three-dimensional element video display 12 of video system 2 according to Embodiment 1.

Video system 2 is a system that acquires a three-dimensional element video signal based on light rays (light ray group) radiated from three-dimensional object 4 by using a light field technique, and displays a three-dimensional element video that shows three-dimensional object 4 based on the video signal acquired. In the present embodiment, three-dimensional object 4 is, for example, the head of a person.

In the present Specification, "three-dimensional element video" means a video that itself cannot be viewed stereoscopically since the video is a two-dimensional video but that can be viewed, as a three-dimensional video, stereoscopically by naked eyes by viewing the three-dimensional element video through a lens array. Moreover, in the present Specification, "video" does not exclusively refer to a movie, but also includes a picture (still image).

As illustrated in FIG. 1, video system 2 includes aerial imaging optical system 6, first lens array 8, camera 10, three-dimensional element video display 12, and second lens array 14. It should be noted that three-dimensional display device 15 is configured by a combination of three-dimensional element video display 12 and second lens array 14. Video system 2 is used for, for example: (a) business purposes such as broadcasting, industrial design, showroom, digital signage, and communication between remote places; (b) amusement purposes such as 3D theater and public viewing; and (c) artistic, scientific, or educational purposes such as digital art, 3D simulator, digital museum, and digital archive.

Aerial imaging optical system 6 is a panel-like optical device having retroreflective properties, and converges, in the air, light rays radiated from three-dimensional object 4 to form aerial image 16 representing three-dimensional object 4. The size of aerial imaging optical system 6 in the vertical direction (size in the up-down direction in FIG. 1) is, for example, approx. 30 cm, and the size of aerial imaging optical system 6 in the horizontal direction (size in the direction perpendicular to the paper on which FIG. 1 is printed) is, for example, approx. 30 cm. Aerial imaging optical system 6 includes: entry surface 18 where light rays radiated from three-dimensional object 4 enter; and exit surface 20 (a surface opposite to entry surface 18) from which light rays for forming aerial image 16 exit. In FIG. 1, entry surface 18 of aerial imaging optical system 6 is perpendicular to the paper on which FIG. 1 is printed, and disposed to face three-dimensional object 4.

Among light rays radiated from three-dimensional object 4, light rays in an angle range corresponding to viewing angle θ (for example, at least 30° and at most 90°) enter entry surface 18. It should be noted that "viewing angle" is an angle range in which an observer can visually recognize a three-dimensional video. Here, since there is no optical center in aerial imaging optical system 6, when the size of three-dimensional object 4 is relatively large (for example, when three-dimensional object 4 is the entire body of a person), aerial image 16 in a size corresponding to the size of three-dimensional object 4 can be formed by two-dimensionally arranging (tiling) a plurality of aerial imaging optical systems 6.

Aerial image 16 is formed at an image-forming position at which aerial image 16 is plane-symmetrical to three-dimensional object 4 with respect to aerial imaging optical system 6. Moreover, the depth of aerial image 16 is inverted relative to the depth of three-dimensional object 4. For example, when the face of a person that is three-dimensional object 4 faces entry surface 18 of aerial imaging optical system 6, the face of a person that is aerial image 16 faces exit surface 20 of aerial imaging optical system 6.

Aerial imaging optical system 6 includes, for example, a dihedral corner reflector array as illustrated in (a) in FIG. 2. As illustrated in (a) in FIG. 2, aerial imaging optical system 6 includes base 22 and a plurality of dihedral corner reflectors 24.

Base 22 is in a flat-plate shape. Base 22 includes first main surface 22a and second main surface 22b that is disposed opposite to first main surface 22a. Second main surface 22b of base 22 functions as exit surface 20 of aerial imaging optical system 6.

The plurality of dihedral corner reflectors 24 are arranged in an array on first main surface 22a of base 22. Each of the plurality of dihedral corner reflectors 24 is a micromirror in a cuboid shape. The length of each side of dihedral corner reflector 24 is at least 0.1 mm and at most 1 mm, for example. As illustrated in (b) in FIG. 2, two adjacent side surfaces that are side surface 24a and side surface 24b of each of the plurality of dihedral corner reflectors 24 include first reflective surface 26a and second reflective surface 26b, respectively. Top surface 24c of each of the plurality of dihedral corner reflectors 24 functions as entry surface 18 of aerial imaging optical system 6.

As illustrated by arrow 28 in (b) in FIG. 2, among light rays entered top surface 24c of dihedral corner reflector 24, a light ray reflected twice, that is, a light ray (totally) reflected at first reflective surface 26a and second reflective surface 26b exits from bottom surface 24d of dihedral corner reflector 24 and contributes to formation of aerial image 16.

It should be noted that although aerial imaging optical system 6 includes a dihedral corner reflector array in the present embodiment, the present invention is not limited to this example and aerial imaging optical system 6 may include a structure in which vertically tapered mirrors are orthogonally arranged (for example, see NPL 4), an optical system configured by a combination of a retroreflective sheet and a half mirror (for example, see NPL 5), or the like. For example, a bead array, a corner cube mirror array, or the like can be used as the retroreflective sheet described above (for example, see NPL 6).

As illustrated in FIG. 1, first lens array 8 is disposed at (or in the vicinity of) the image-forming position of aerial image 16. Here, the vicinity of aerial image 16 means an area within several centimeters from the image-forming position of aerial image 16. First lens array 8 includes entry surface 30 where light rays radiated from aerial image 16 enter and exit surface 32 (a surface opposite to entry surface 30) from which light rays passed through entry surface 30 exit. In FIG. 1, entry surface 30 of first lens array 8 is perpendicular to the paper on which FIG. 1 is printed, and disposed to face exit surface 20 of aerial imaging optical system 6.

Regarding the positional relationship between first lens array 8 and aerial image 16, a depth position of aerial image 16 at which first lens array 8 is disposed is captured with the highest spatial resolution. Therefore, first lens array 8 may be disposed at, among depth positions of aerial image 16, a depth position that is wanted to be captured with highest spatial resolution. For example, when aerial image 16 is the head of a person, first lens array 8 may be disposed at a depth position of the face of the person that is aerial image 16.

As illustrated in FIG. 3, first lens array 8 includes a plurality of first lenses 34 arranged two-dimensionally along entry surface 30. It should be noted that FIG. 3 shows part of first lens array 8 enlarged. In plan view of first lens array 8 (when first lens array 8 is viewed in a direction perpendicular to entry surface 30), each of the plurality of first lenses 34 is in a hexagonal shape, for example. In other words, first lens array 8 has a honeycomb structure. Since the plurality of first lenses 34 can be arranged two-dimensionally without any gap therebetween by forming each of the plurality of first lenses 34 in a hexagonal shape, first lens array 8 does not include non-lens area, and a large effective area can be achieved. It should be noted that each of the plurality of first lenses 34 is a microlens, and size L of each of the plurality of first lenses 34 may be at least 300 µm and at most 2.5 mm, and preferably at least 0.5 mm and at most 1.5 mm, for example.

As illustrated in FIG. 4, when light rays radiated from aerial image 16 enter entry surface 30 of first lens array 8, light rays in viewing angle θ are acquired at each of the plurality of first lenses 34. Moreover, among light rays exited from exit surface 32 of first lens array 8, light rays captured by camera 10 are light rays that are approximately parallel to each other and directed toward camera 10.

The shape of a surface of each of the plurality of first lenses 34 may be spherical or aspherical. It should be noted that by making the shape of a surface of each of the plurality of first lenses 34 aspherical, the influence of spherical aberration of light rays around the plurality of first lenses 34 is decreased and light rays in viewing angle θ can be acquired with uniform accuracy.

The curvature of each of the plurality of first lenses 34 may be a curvature uniform in all directions (i.e., a curvature in the horizontal direction and a curvature in the vertical direction may be the same). Alternatively, the curvature of each of the plurality of first lenses 34 in the horizontal direction and the curvature of each of the plurality of first lenses 34 in the vertical direction may be different from each other. Thus, distance between light rays, light ray density, viewing angle, or the like that can be acquired by first lens array 8 can be controlled. For example, the viewing angle in the horizontal direction can be made larger than the viewing angle in the vertical direction by making the curvature of each of the plurality of first lenses 34 in the horizontal direction larger than the curvature of each of the plurality of first lenses 34 in the vertical direction. In the present Specification, "horizontal direction" means a direction parallel to a floor surface, and "vertical direction" is a direction perpendicular to the floor surface.

It should be noted that although first lens array 8 consists of refractive lenses in the present embodiment, the present invention is not limited to this example and first lens array 8 may consist of diffractive lenses. Alternatively, first lens array 8 may consist of a lenticular lens. In this case, each of the plurality of first lenses 34 is a so-called cylindrical lens that has a curvature in the horizontal direction but does not have a curvature in the vertical direction. Accordingly, although light ray information only in the horizontal direction is acquired, it is effective for acquiring a high-resolution three-dimensional video with only horizontal parallax in which pixel information can be used as resolution characteristics.

Camera 10 is a digital camera that includes imaging lens 36 and image sensor 38, and is disposed to face exit surface 32 of first lens array 8. In the present embodiment, only one camera 10 is disposed. Camera 10 captures light rays exited from exit surface 32 of first lens array 8 (i.e., light rays radiated from aerial image 16 and passed through the plurality of first lenses 34 of first lens array 8). Specifically, light rays exited from exit surface 32 of first lens array 8 are converged on image sensor 38 by imaging lens 36, and captured by image sensor 38. Camera 10 generates a three-dimensional element video signal including light ray information related to the traveling direction, color, or the like of light rays exited from the plurality of first lenses 34, and outputs, to three-dimensional element video display 12, the three-dimensional element video signal generated. At this time, when camera 10 is sufficiently distant from first lens array 8 as illustrated in FIG. 4, camera 10 may capture, in a pan-focus state, light rays exited from exit surface 32 of first lens array 8. Thus, a three-dimensional element video signal having high resolution in a depth range can be generated.

It should be noted that for capturing, at least 100 pixels and at most 400 pixels or more, light rays exited from the plurality of first lenses 34, camera 10 that is an ultra-high definition digital camera with resolution of 8K or more may be used. Moreover, although camera 10 outputs a three-dimensional element video signal to three-dimensional element video display 12 in the present embodiment as illustrated in FIG. 1, the present invention is not limited to this example, and camera 10 may output a three-dimensional element video signal to an external terminal device such as a personal computer or may record a three-dimensional element video signal on an external video recording device such as a cloud server. When a three-dimensional element video signal is outputted to an external terminal device, calculation of a three-dimensional shape, generation of a three-dimensional model, generation of a multi-viewpoint video, or the like may be performed at the external terminal device, for example. Alternatively, camera 10 may distribute, to a remote place via a network, a three-dimensional element video represented by a three-dimensional element video signal. Moreover, for example, a three-dimensional element video represented by a three-dimensional element video signal may be recorded on a recording medium such as a flexible disk, hard disk, CD-ROM, MO, DVD, DVD-ROM, DVD-RAM, BD, or a semiconductor memory.

As illustrated in FIG. 1, three-dimensional element video display 12 includes, for example, a liquid crystal display or the like, and receives a three-dimensional element video signal from camera 10. Display surface 40 is provided to a front surface of three-dimensional element video display 12. Three-dimensional element video 42 is displayed on display surface 40 of three-dimensional element video display 12, based on a three-dimensional element video signal from camera 10. As described above, three-dimensional element video 42 is a two-dimensional video that itself cannot be viewed stereoscopically. In FIG. 1, display surface 40 of three-dimensional element video display 12 is perpendicular to the paper on which FIG. 1 is printed, and disposed to face observer 50. Capture of light rays by camera 10 and display of three-dimensional element video 42 by three-dimensional element video display 12 are performed in real time. Accordingly, three-dimensional element video 42 is a moving two-dimensional video that is synchronized with the motion of three-dimensional object 4 that moves in real time.

It should be noted that the number of first lenses 34 of first lens array 8 corresponds to the resolution of three-dimensional element video 42. Moreover, the number of pixels that capture an image in a single first lens 34 defines light ray density. Furthermore, a viewing angle that can be captured by camera 10 is defined by the number of apertures of first lenses 34. Therefore, first lens array 8 preferably has a fine and dense lens structure.

Second lens array 14 is a lens array that is in the substantially same shape as first lens array 8. Second lens array 14 is disposed to face display surface 40 of three-dimensional element video display 12. Second lens array 14 includes entry surface 44 where light rays from display surface 40 of three-dimensional element video display 12 enter and exit surface 46 (a surface opposite to entry surface 44) from which light rays entered entry surface 44 exit. Second lens array 14 includes a plurality of second lenses 48 arranged two-dimensionally along entry surface 44, and each of the plurality of second lenses 48 is in the same shape as each of the plurality of first lenses 34 of first lens array 8. The optical path length between second lens array 14 and display surface 40 of three-dimensional element video display 12 is substantially the same as the focal length of each of the plurality of second lenses 48.

Light rays from three-dimensional element video 42 displayed on display surface 40 of three-dimensional element video display 12 enter entry surface 44 of second lens array 14. At this time, light rays from three-dimensional element video 42 are converted, by the plurality of second lenses 48 of second lens array 14, to light rays entered the plurality of first lenses 34 of first lens array 8 (i.e., light rays radiated from aerial image 16). This is because second lens array 14 has the substantially same shape as first lens array 8. Accordingly, observer 50 can stereoscopically view three-dimensional video 52 by the naked eyes by viewing, through second lens array 14, three-dimensional element video 42 displayed on display surface 40 of three-dimensional element video display 12. Namely, it can be said that three-dimensional video 52 is a video in which light rays radiated from aerial image 16 are reproduced (recreated), as well as a video that shows three-dimensional object 4. At this time, observer 50 can stereoscopically view three-dimensional video 52 in viewing angle θ described-above (see FIG. 1).

It should be noted that the depth of three-dimensional video 52 is a correct depth when viewed from observer 50. For example, when the face of a person that is three-dimensional object 4 faces entry surface 18 of aerial imaging optical system 6, the face of a person that is three-dimensional video 52 faces observer 50.

FIG. 6 illustrates an actual example of three-dimensional element video 42. More specifically, (a) in FIG. 6 is a diagram illustrating three-dimensional element video 42, and (b) in FIG. 6 is a diagram illustrating part of three-dimensional element video 42 illustrated in (a) in FIG. 6 enlarged. In the example illustrated in FIG. 6, a three-dimensional object shown in three-dimensional element video 42 is a teddy bear. As illustrated in (b) in FIG. 6, in three-dimensional element video 42, a plurality of hexagonal element images 54 are arranged side by side without any gap. Each of the plurality of element images 54 is an image acquired by capturing light rays exited from the plurality of first lenses 34 of first lens array 8. Light rays from the plurality of element images 54 pass through the plurality of second lenses 48 of second lens array 14, and thus light rays radiated from aerial image 16 are reproduced.

### [1-2. Effect]

The configuration of video system 100 according to a comparative example is described with reference to FIG. 7. FIG. 7 illustrates the configuration of video system 100 according to the comparative example. It should be noted that in FIG. 7, constituent elements that are the same as those in FIG. 1 share like reference signs, and detailed description thereof is omitted.

As illustrated in FIG. 7, video system 100 includes optical lens 102, first lens array 8, camera 10, three-dimensional element video display 12, and second lens array 14. Namely, optical lens 102 is provided to video system 100, instead of aerial imaging optical system 6 of video system 2 described above.

Optical lens 102 is a convex lens, and disposed at a position distant from three-dimensional object 4 by a distance that is twice focal length f. Optical lens 102 forms, at a position distant from optical lens 102 by a distance that is twice focal length f, real image 104 of three-dimensional object 4. It should be noted that although the up-down direction of real image 104 is inverted relative to the up-down direction of three-dimensional object 4, the depth of real image 104 is not inverted relative to the depth of three-dimensional object 4.

First lens array 8 is disposed at the image-forming position of real image 104. Light rays radiated from real image 104 pass through first lens array 8. Camera 10 generates a three-dimensional element video signal by capturing light rays passed through first lens array 8, and outputs, to three-dimensional element video display 12, the three-dimensional element video signal generated. Thus, a three-dimensional element video represented by the three-dimensional element video signal is displayed in three-dimensional element video display 12. Observer 50 can stereoscopically view three-dimensional video 106 by the naked eyes by viewing, through second lens array 14, the three-dimensional element video displayed in three-dimensional element video display 12.

However, in video system 100 described above, diameter D of optical lens 102 needs to be very large (for example, D = between approx. 50 cm and 1 m) for acquiring light ray information in a wide viewing angle, and it is difficult to manufacture optical lens 102 in such a size. Moreover, since distance L between three-dimensional object 4 and camera 10 needs to be several meters, the scale of the whole video system 100 is large and video system 100 is not practical.

Furthermore, the depth of three-dimensional video 106 is a depth in an opposite direction when viewed from observer 50. For example, when the face of a person that is three-dimensional object 4 faces optical lens 102, the face of a person that is three-dimensional video 106 faces a side opposite to observer 50. This is because the depth of real image 104 formed by optical lens 102 is not inverted relative to the depth of three-dimensional object 4. Therefore, observer 50 cannot stereoscopically view three-dimensional video 106 in a correct depth.

In contrast, since aerial imaging optical system 6 having retroreflective properties is used in the present embodiment, viewing angle θ for viewing light rays that enter, from three-dimensional object 4, aerial imaging optical system 6 can be made wide, for example, between approx. 30° and 90°, even when the size of aerial imaging optical system 6 is relatively small (for example, approx. 30 cm × 30 cm). Accordingly, light ray information in wide viewing angle θ can be acquired while keeping the scale of the whole video system 2 small. Moreover, even when only single digital camera is used as camera 10, light ray information in viewing angle θ, which is wide compared to a viewing angle in a case where a conventional dedicated camera equipped with an image sensor and a lens array is used, can be acquired.

Furthermore, since there is no optical aberration or optical distortion in aerial image 16 formed by aerial imaging optical system 6, deterioration of an image can be suppressed. Furthermore, since aerial imaging optical system 6 does not have a unique focal length, aerial image 16 in the original size of three-dimensional object 4 can be formed even when three-dimensional object 4 is at a position distant from aerial imaging optical system 6 by an arbitrary distance. Furthermore, since the depth of aerial image 16 is inverted relative to the depth of three-dimensional object 4, the depth of three-dimensional video 52 can be a correct depth when viewed from observer 50. Furthermore, as illustrated in (a) and (b) in FIG. 5, since the distribution of light rays radiated in various directions from three-dimensional video 52 is almost the same as the distribution of light rays radiated in various directions from three-dimensional object 4, the texture (for example, gloss or the like) of the surface of three-dimensional object 4 can be precisely reproduced in three-dimensional video 52.

### [1-3. Variations of First Lens Array]

### [1-3-1. Variation 1]

The configuration of first lens array 8A according to Variation 1 of Embodiment 1 is described with reference to FIG. 8A. FIG. 8A illustrates first lens array 8A according to Variation 1 of Embodiment 1.

As illustrated in FIG. 8A, first lens array 8A includes a plurality of first lenses 34A arranged two-dimensionally. In plan view of first lens array 8A, each of the plurality of first lenses 34A is in a circular shape. Moreover, the arrangement of the plurality of first lenses 34A is an off-set arrangement. In this case, non-lens area 56 is formed between two adjacent first lenses 34A.

It should be noted that although the arrangement of the plurality of first lenses 34A is the off-set arrangement in the present variation, the present invention is not limited to this example, and the arrangement of the plurality of first lenses 34A may be a grid arrangement, for example.

### [1-3-2. Variation 2]

The configuration of first lens array 8B according to Variation 2 of Embodiment 1 is described with reference to FIG. 8B. FIG. 8B illustrates first lens array 8B according to Variation 2 of Embodiment 1.

As illustrated in FIG. 8B, first lens array 8B includes a plurality of first lenses 34A arranged two-dimensionally. The shape and arrangement of the plurality of first lenses 34A is the same as Variation 1 described above. However, light-blocking area 58 is provided to non-lens area 56 formed between two adjacent first lenses 34A. Light-blocking area 58 is formed by applying black paint having light-blocking properties, for example. Light-blocking area 58 can suppress unwanted light leakage from non-lens area 56.

### [1-3-3. Variation 3]

The configuration of first lens array 8C according to Variation 3 of Embodiment 1 is described with reference to FIG. 8C. FIG. 8C illustrates first lens array 8C according to Variation 3 of Embodiment 1.

As illustrated in FIG. 8C, first lens array 8C includes a plurality of first lenses 34C arranged two-dimensionally. In plan view of first lens array 8C, each of the plurality of first lenses 34C is in a square shape (an example of a rectangular shape). Moreover, the arrangement of the plurality of first lenses 34C is a grid arrangement. Accordingly, light rays in the horizontal direction (the lateral direction in FIG. 8C) and light rays in the vertical direction (the up-down direction in FIG. 8C) can be acquired in the same viewing angle.

### [1-3-4. Variation 4]

The configuration of first lens array 8D according to Variation 4 of Embodiment 1 is described with reference to FIG. 8D. FIG. 8D illustrates first lens array 8D according to Variation 4 of Embodiment 1.

As illustrated in FIG. 8D, first lens array 8D includes a plurality of first lenses 34D arranged two-dimensionally. In plan view of first lens array 8D, each of the plurality of first lenses 34D is in an oblong shape (an example of a rectangular shape). The long sides of each of the plurality of first lenses 34D extend in the horizontal direction (the lateral direction in FIG. 8D), and the short sides of each of the plurality of first lenses 34D extend in the vertical direction (the up-down direction in FIG. 8D). Moreover, the arrangement of the plurality of first lenses 34D is a grid arrangement. Accordingly, a viewing angle in the horizontal direction and a viewing angle in the vertical direction can be easily controlled by the aspect ratio of first lens 34D.

### [1-3-5. Variation 5]

The configuration of first lens array 8E according to Variation 5 of Embodiment 1 is described with reference to FIG. 8E. FIG. 8E illustrates first lens array 8E according to Variation 5 of Embodiment 1.

As illustrated in FIG. 8E, first lens array 8E includes a plurality of first lenses 34E arranged two-dimensionally. In plan view of first lens array 8E, each of the plurality of first lenses 34E is in an oblong shape (an example of a rectangular shape). Moreover, the long sides of each of the plurality of first lenses 34E extend in the horizontal direction (the lateral direction in FIG. 8E), and the short sides of each of the plurality of first lenses 34E extend in the vertical direction (the up-down direction in FIG. 8E). Moreover, the arrangement of the plurality of first lenses 34E is a staggered arrangement. Accordingly, the resolution characteristics in the horizontal direction can be improved.

### (Embodiment 2)

The configuration of video system 2F according to Embodiment 2 is described with reference to FIG. 9. FIG. 9 illustrates part of the configuration of video system 2F according to Embodiment 2. It should be noted that in each of the following embodiments, the constituent elements that are the same as those in Embodiment 1 share like reference signs, and detailed description thereof is omitted.

As illustrated in FIG. 9, video system 2F includes condenser lens 60, in addition to the constituent elements described in Embodiment 1 above. Condenser lens 60 is a convex lens, and disposed to face exit surface 32 of first lens array 8. Moreover, camera 10 is disposed at a position distant from condenser lens 60 by focal length f. Condenser lens 60 converges, at the position of camera 10, light rays that are parallel to each other and directed toward camera 10 among light rays exited from exit surface 32 of first lens array 8. Accordingly, compared to Embodiment 1 described above, camera 10 can be located close to first lens array 8 and the scale of the whole video system 2F can be made small.

### (Embodiment 3)

The configuration of video system 2G according to Embodiment 3 is described with reference to FIG. 10. FIG. 10 illustrates part of the configuration of video system 2G according to Embodiment 3.

As illustrated in FIG. 10, video system 2G includes aperture array 62, in addition to the constituent elements described in Embodiment 1 above. Aperture array 62 is disposed to face entry surface 30 of first lens array 8. Namely, aperture array 62 is disposed between aerial imaging optical system 6 (see FIG. 1) and first lens array 8. Aperture array 62 includes a plurality of apertures 64. Each of the plurality of apertures 64 is disposed at a different one of the positions of the focal lengths of the plurality of first lenses 34, and faces a different one of the plurality of first lenses 34 of first lens array 8.

Accordingly, unwanted light is prevented from entering first lens array 8 by blocking the unwanted light by aperture array 62. As a result, an image in three-dimensional element video 42 can be prevented from being blurred. Moreover, light ray information with a wide depth reproduction range can be acquired by adjusting the size of each of the plurality of apertures 64.

### (Embodiment 4)

The configuration of video system 2H according to Embodiment 4 is described with reference to FIG. 11. FIG. 11 illustrates part of the configuration of video system 2H according to Embodiment 4.

As illustrated in FIG. 11, video system 2H includes a plurality of cameras 10. Each of the plurality of cameras 10 has the same configuration as a single camera 10 described in Embodiment 1 above. Namely, each of the plurality of cameras 10 generates a three-dimensional element video signal by capturing light rays exited from exit surface 32 of first lens array 8, and outputs, to a three-dimensional element video display (not illustrated), the three-dimensional element video signal generated.

Accordingly, more light ray information in a wide viewing angle can be easily acquired by the plurality of cameras 10, and the reproducibility of three-dimensional video 52 can be improved.

### (Embodiment 5)

The configuration of video system 2J according to Embodiment 5 is described with reference to FIG. 12. FIG. 12 illustrates the configuration of video system 2J according to Embodiment 5.

As illustrated in FIG. 12, three-dimensional display device 15J of video system 2J includes detector 66 and display controller 68, in addition to three-dimensional element video display 12 and second lens array 14 described in Embodiment 1 above. Moreover, second lens array 14 is attachable to and detachable from display surface 40 of three-dimensional element video display 12.

Detector 66 is a sensor that detects attachment or detachment of second lens array 14 to or from display surface 40 of three-dimensional element video display 12. Detector 66 outputs a detection result to display controller 68.

Display controller 68 controls display content on display surface 40 of three-dimensional element video display 12, based on the detection result of detector 66.

Specifically, when second lens array 14 is attached to display surface 40 of three-dimensional element video display 12, display controller 68 displays a three-dimensional element video on display surface 40. Accordingly, observer 50 can stereoscopically view three-dimensional video 52 by the naked eyes by viewing, through second lens array 14, a three-dimensional element video displayed on display surface 40 of three-dimensional element video display 12.

In contrast, when second lens array 14 is detached from display surface 40 of three-dimensional element video display 12, display controller 68 displays, on display surface 40, an other video that is different from a three-dimensional element video. It should be noted that "an other video that is different from a three-dimensional element video" is a two-dimensional video that itself cannot be viewed stereoscopically even when second lens array 14 is used, and is, for example, a video shown by playing back normal video content or the like. Accordingly, observer 50 can visually recognize the two-dimensional video by viewing, without second lens array 14, the other video displayed on display surface 40 of three-dimensional element video display 12.

It should be noted that display controller 68 may be disposed inside or outside of three-dimensional element video display 12.

Accordingly, in the present embodiment, display content on display surface 40 of three-dimensional element video display 12 can be appropriately changed according to attachment or detachment of second lens array 14 to or from display surface 40 of three-dimensional element video display 12.

### (Embodiment 6)

The configuration of video system 2K according to Embodiment 6 is described with reference to FIG. 13. FIG. 13 illustrates the configuration of video system 2K according to Embodiment 6.

As illustrated in FIG. 13, in three-dimensional display device 15K of video system 2K, second lens array 14K includes polarization direction switching element 70 and polarization-dependent lens array 72.

Three-dimensional element video display 12 is a liquid crystal display that emits light polarized in one direction. Alternatively, when three-dimensional element video display 12 is an electro luminescence (EL) display or a light emitting diode (LED) display that does not emit light polarized in one direction, three-dimensional element video display 12 includes an optical element (a polarizing plate) that polarizes light in one direction.

Polarization direction switching element 70 is disposed to face display surface 40 of three-dimensional element video display 12. Accordingly, light rays emitted from display surface 40 of three-dimensional element video display 12 pass through polarization direction switching element 70. Polarization direction switching element 70 controls the polarization direction of light rays emitted from display surface 40 of three-dimensional element video display 12 (i.e., light rays passed through polarization direction switching element 70), according to display content on display surface 40 of three-dimensional element video display 12.

Specifically, when a three-dimensional element video is displayed on display surface 40 of three-dimensional element video display 12, polarization direction switching element 70 polarizes light rays emitted from display surface 40 in a first polarization direction. In contrast, when an other video that is different from a three-dimensional element video is displayed on display surface 40 of three-dimensional element video display 12, polarization direction switching element 70 polarizes light rays emitted from display surface 40 in a second polarization direction that is orthogonal to the first polarization direction (i.e., that is different from the first polarization direction).

Polarization-dependent lens array 72 consists of, for example, liquid crystal lenses or the like, and is disposed to face an exit surface (i.e., a surface disposed on a side farther from three-dimensional element video display 12) of polarization direction switching element 70. Accordingly, light rays in the first polarization direction or the second polarization direction that passed through polarization direction switching element 70 enter polarization-dependent lens array 72.

When light rays in the first polarization direction enter polarization-dependent lens array 72, the light rays in the first polarization direction are converted, by polarization-dependent lens array 72, to light rays that enter first lens array 8. Namely, in this case, polarization-dependent lens array 72 functions in the same manner as second lens array 14 described in Embodiment 1 above. Accordingly, observer 50 can stereoscopically view three-dimensional video 52 by the naked eyes by viewing, through second lens array 14K, a three-dimensional element video displayed on display surface 40 of three-dimensional element video display 12.

In contrast, when light rays in the second polarization direction enter polarization-dependent lens array 72, the light rays in the second polarization direction pass through polarization-dependent lens array 72. Namely, in this case, polarization-dependent lens array 72 functions in the same manner as a transparent glass plate that does not have a lens function, for example. Accordingly, observer 50 can visually recognize a two-dimensional video by viewing, through second lens array 14K, an other video that is different from a three-dimensional element video and displayed on display surface 40 of three-dimensional element video display 12.

Accordingly, in the present embodiment, according to display content on display surface 40 of three-dimensional element video display 12, observer 50 can stereoscopically view, as three-dimensional video 52, a three-dimensional element video, or can view, as a two-dimensional video, an other video that is different from a three-dimensional element video, in a state where second lens array 14K is attached to display surface 40 of three-dimensional element video display 12.

### (Embodiment 7)

The configuration of video system 2L according to Embodiment 7 is described with reference to FIG. 14 and FIG. 15. FIG. 14 is a block diagram illustrating the functional configuration of video system 2L according to Embodiment 7. FIG. 15 is a diagram for describing operation of processor 74 according to Embodiment 7.

As illustrated in FIG. 14, video system 2L includes, as the functional configuration, processor 74 for performing a predetermined process on a three-dimensional element video signal outputted from camera 10. Processor 74 includes converter 76, encoder 78, and decoder 80.

As illustrated in (a) in FIG. 15, converter 76 converts a three-dimensional element video signal from camera 10 to a signal of a multi-viewpoint video group that includes a plurality of videos from multiple viewpoints. Here, viewing angle θ from each of the multiple viewpoints is at least 30° and at most 90°. Moreover, the pitch between the multiple viewpoints may be at least 0.5° and at most 2°, and preferably approx. 1°. Alternatively, converter 76 may convert a three-dimensional element video signal from camera 10 to a signal of a multi-viewpoint video group with depth images.

For example, encoder 78 encodes, by a predetermined encoding method such as H.264/multi-view video coding (MVC), a signal of a multi-viewpoint video group converted by converter 76. Alternatively, for example, encoder 78 encodes, by a predetermined encoding method such as 3D high efficiency video coding (HEVC), a signal of a multi-viewpoint video group with depth images converted by converter 76. Encoder 78 transmits the signal encoded to decoder 80.

Decoder 80 generates a three-dimensional element video signal by decoding, by a predetermined decoding method, the signal encoded by encoder 78. As illustrated in (b) in FIG. 15, among a plurality of element videos included in a three-dimensional element video represented by the three-dimensional element video signal, a single element video corresponding to a single second lens 48 of second lens array 14 (see FIG. 1) includes the plurality of videos from multiple viewpoints. Namely, the number of viewpoints of the plurality of videos from multiple viewpoints is equal to the number of pixels of a single element video in the three-dimensional element video, and the number of pixels of the multi-viewpoint video group is equal to the number of element videos in the three-dimensional element video (the number of second lenses 48). It should be noted that element videos in the three-dimensional element video and second lenses 48 of second lens array 14 are in one-to-one correspondence. Decoder 80 outputs the three-dimensional element video signal generated to three-dimensional element video display 12.

Thus, a three-dimensional element video signal can be easily transmitted in the present embodiment.

### (Other Variations etc.)

Although video systems according to Embodiments 1 to 7 of the present invention have been described, the present invention is not limited to these embodiments. For example, the above-described embodiments may be arbitrarily combined.

Although three-dimensional element video display 12 includes a liquid crystal display in the above-described embodiments, the present invention is not limited to this example, and, for example, three-dimensional element video display 12 may include a head mounted display, a glasses-type display, a goggles-type display, or the like.

### [Industrial Applicability]

For example, the present invention is applicable as a video system for acquiring a three-dimensional element video signal by a light field technique, or the like.

### [Reference Signs List]

2,2F,2G,2H,2J,2K,2L,100 video system
4 three-dimensional object
6 aerial imaging optical system
8,8A,8B,8C,8D,8E first lens array
10 camera
12 three-dimensional element video display
14,14K second lens array
15,15J,15K three-dimensional display device
16 aerial image
18,30,44 entry surface
20,32,46 exit surface
22 base
22a first main surface
22b second main surface
24 dihedral corner reflector
24a,24b side surface
24c top surface
24d bottom surface
26a first reflective surface
26b second reflective surface
28 arrow
34,34A,34C,34D,34E first lens
36 imaging lens
38 image sensor
40 display surface
42 three-dimensional element video
48 second lens
50 observer
52,106 three-dimensional video
54 element image
56 non-lens area
58 light-blocking area
60 condenser lens
62 aperture array
64 aperture
66 detector
68 display controller
70 polarization direction switching element
72 polarization-dependent lens array
74 processor
76 converter
78 encoder
80 decoder
102 optical lens
104 real image

## Claims

1. A video system comprising:
an aerial imaging optical system that has retroreflective properties and converges, in air, light rays from a three-dimensional object to form an aerial image representing the three-dimensional object;
a first lens array that is disposed at an image-forming position of the aerial image or in a vicinity of the image-forming position and includes a plurality of first lenses arranged two-dimensionally; and
a camera that includes an imaging lens and an image sensor and captures light rays transmitted from the aerial image through the first lens array to output a three-dimensional element video signal including light ray information related to the light rays from the aerial image.

2. The video system according to claim 1, wherein
the camera: (i) outputs the three-dimensional element video signal to an external terminal device; (ii) records the three-dimensional element video signal on an external video recording device; or (iii) outputs the three-dimensional element video signal to a three-dimensional element video display.

3. The video system according to claim 1, wherein
the aerial imaging optical system reflects the light rays from the three-dimensional object at least twice to form the aerial image at the image-forming position at which the aerial image is symmetrical to the three-dimensional object with respect to the aerial imaging optical system.

4. The video system according to claim 1, wherein
in plan view of the first lens array, each of the plurality of first lenses is in a circular, rectangular, or hexagonal shape.

5. The video system according to claim 1, wherein
a shape of a surface of each of the plurality of first lenses is spherical or aspherical.

6. The video system according to claim 1, wherein
a curvature of each of the plurality of first lenses in a horizontal direction and a curvature of each of the plurality of first lenses in a vertical direction are same, or the curvature in the horizontal direction is larger than the curvature in the vertical direction.

7. The video system according to claim 1, further comprising:
an aperture array that is disposed between the aerial imaging optical system and the first lens array and includes a plurality of apertures arranged at focal length positions of the plurality of first lenses.

8. The video system according to claim 1, wherein
the camera includes a single digital camera or a plurality of digital cameras.

9. The video system according to any one of claims 1 to 8, further comprising:
a three-dimensional element video display that includes a display surface, receives the three-dimensional element video signal outputted from the camera, and displays a three-dimensional element video on the display surface based on the three-dimensional element video signal; and
a second lens array that is in a substantially same shape as the first lens array, is disposed to face the display surface of the three-dimensional element video display, and includes a plurality of second lenses arranged two-dimensionally, wherein
an optical path length between the display surface of the three-dimensional element video display and the second lens array is substantially same as a focal length of each of the plurality of second lenses.

10. A three-dimensional element video acquisition method comprising:
converging, in air, light rays from a three-dimensional object to form an aerial image representing the three-dimensional object, by using an aerial imaging optical system that has retroreflective properties;
transmitting light rays from the aerial image through a first lens array that is disposed at an image-forming position of the aerial image or in a vicinity of the image-forming position and includes a plurality of first lenses arranged two-dimensionally; and
capturing the light rays transmitted from the aerial image through the first lens array to output a three-dimensional element video signal including light ray information related to the light rays from the aerial image, by using a camera that includes an imaging lens and an image sensor.

11. A recording medium having recorded thereon a three-dimensional element video represented by the three-dimensional element video signal outputted from the video system according to claim 1.

12. The second lens array included in the video system according to claim 9.

13. A three-dimensional display device comprising:
the three-dimensional element video display and the second lens array that are included in the video system according to claim 9.

14. The three-dimensional display device according to claim 13, wherein
the second lens array is attachable to and detachable from the display surface of the three-dimensional element video display,
the three-dimensional display device further comprising:
a detector that detects attachment or detachment of the second lens array to or from the display surface of the three-dimensional element video display; and
a display controller that controls display content on the display surface of the three-dimensional element video display, based on a detection result of the detector, wherein
the display controller displays, on the display surface:
(i) the three-dimensional element video, when the second lens array is attached to the display surface; and
(ii) an other video that is different from the three-dimensional element video, when the second lens array is detached from the display surface.

15. The three-dimensional display device according to claim 13, wherein
the second lens array includes:
a polarization direction switching element that transmits light rays emitted from the display surface of the three-dimensional element video display to:
(i) polarize, in a first polarization direction, the light rays emitted from the display surface, when the three-dimensional element video is displayed on the display surface; and
(ii) polarize, in a second polarization direction, the light rays emitted from the display surface, when an other video that is different from the three-dimensional element video is displayed on the display surface, the second polarization direction being different from the first polarization direction; and
a polarization-dependent lens array where the light rays transmitted through the polarization direction switching element and polarized in the first polarization direction or the second polarization direction enter.

16. A three-dimensional element video signal transmission method for transmitting the three-dimensional element video signal outputted from the camera included in the video system according to claim 1, the three-dimensional element video signal transmission method comprising:
(a) converting, to a signal of a multi-viewpoint video group or a signal of a multi-viewpoint video group with depth images, the three-dimensional element video signal outputted from the camera;
(b) encoding, by a predetermined encoding method, the signal obtained in the converting in (a);
(c) transmitting the signal encoded in (b); and
(d) decoding, by a predetermined decoding method, the signal transmitted in (c), wherein
a viewing angle from each of multiple viewpoints included in the multi-viewpoint video group is at least 30° and at most 90°, and a pitch between the multiple viewpoints is at least 0.5° and at most 2°.
